Europäisches Patentamt

European Patent Office

Office européen des brevets

(11) Publication number: **0 180 345**
**B1**

## (12) EUROPEAN PATENT SPECIFICATION

(45) Date of publication of patent specification: **21.03.90**

(21) Application number: **85307095.1**

(22) Date of filing: **03.10.85**

(51) Int. Cl.⁵: **H 04 N 7/137**

(54) **Method and apparatus for picture signal encoding and decoding.**

(30) Priority: **04.10.84 JP 208624/84**
**04.10.84 JP 208625/84**

(43) Date of publication of application:
**07.05.86 Bulletin 86/19**

(45) Publication of the grant of the patent:
**21.03.90 Bulletin 90/12**

(84) Designated Contracting States:
**DE FR GB IT**

(56) References cited:
**EP-A-0 103 380**
**DE-A-2 703 909**
**US-A-3 767 847**
**US-A-4 460 923**

(73) Proprietor: **NEC CORPORATION**
**33-1, Shiba 5-chome, Minato-ku**
**Tokyo 108 (JP)**

(72) Inventor: **Koga, Toshio c/o NEC Corporation**
**33-1, Shiba 5-chome Minato-ku**
**Tokyo (JP)**

(74) Representative: **Jackson, David Spence et al**
**REDDIE & GROSE 16, Theobalds Road**
**London, WC1X 8PL (GB)**

## Description

The present invention relates to a coding technology for picture signals.

Picture signals, especially television signals which are typical motion picture signals, present a high correlation between frames i.e. high interframe correlation. By making use of high interframe correlation, it is possible to reduce i.e. compress a large volume of information at the time of transmission. A system called "interframe predictive coding" is the simplest system among the methods of utilizing interframe correlation. See H. Kaneko and T. Ishiguro "Digital television transmission using bandwidth compression techniques", IEEE Communication Magazine, July 1980, pp. 14 - 22. With this system, the smaller the number of moving portions included in a frame, the greater the compression ratio becomes. However, when the extent of motion (area, or velocity etc.) is large, a large degree of compression cannot be expected. On the other hand, a "Motion-compensated interframe predictive coding system" has been proposed which always realizes adaptively an optimum prediction with respect to moving portions, when they are included, by utilizing a motion vector indicative of moving speed and direction of the moving portions. This motion-compensated interframe coding method makes it possible to achieve a compression to a substantial extent even if moving portions are included in the frame. For instance, an example of the motion-compensated interframe coding system is described in USP No. 4,460,923 assigned to the same applicant as the present invention. This patent discloses a predictive coding system capable of remarkably improving coding efficiency especially where the transmission speed is low. In a code conversion which uses as small a quantity of codes as possible for expressing prediction error or motion vector obtained as a result of high efficiency predictive coding, and coding parameters or horizontal and vertical synchronizing signal etc. used in the predictive coding, a variable length code e.g. Huffman code etc. is often used.

The coding parameter is not necessarily changed every scanning line. Ordinarily, such alternation is effected with N scanning lines (N≧1), e.g., N=8 as a unit. Accordingly, it is convenient to effect coding conversion per N scanning lines. In an example of a simple code conversion having a code sequence, the encoding procedure comprises providing in succession a synchronizing code (e.g. zero of 8 bits) indicating that a vertical or horizontal synchronising signal subsequently arrives, a line synchronising code representative of horizontal synchronisation of N scanning lines, a coding mode signal and a motion vector code signal, and encoding a prediction error obtained when a predictive coding is effected by using the motion vector code signal and its coding mode signal, thus completing code conversion in regard to N scanning lines. The synchronising code, the line synchronising code and the coding mode signals have a bit configuration of 8 bit respectively, so that 24 bits are used in total for expressing these signals, Assuming that a picture signal system has M scanning lines, 24 × M/N bits per one frame are required For instance, when M=525 and N=8, 1575 bits per one frame are required. In a system where 30 frames per second are transmitted, the bit rate then 1575 × 30 = 47K bps (bits per second). This is a fixed quantity of information which is produced even in the case where both the motion vector and the prediction error have negligible values nearly equal to zero. Assuming now that the bit rate of a communication channel used in the transmission is 1.5M bps, the ratio of 47/1500 = 1/30 is not so high. However, in the case where the bit rate of the communication channel lower than 1.5M bps, e.g., 500K bps, the ratio becomes 47/500 = 1/10 which is significantly large. Accordingly, when transmitting a picture signal at a low transmission speed or bit rate, in the case where a motion vector and a prediction error are repeated in the same manner every N scanning lines under the same coding mode, a method which allows code conversion with a reduced quantity of codes is required.

## Summary of the Invention

With the above in view, an object of the present invention is to provide a code conversion system suitable for a low bit transmission rate of picture signals.

According to the present invention, there is provided a method for encoding a picture signal using interframe correlation, including the steps of: presetting a number N for defining a unit of N scanning lines (N is a positive integer) of said picture signal to be encoded; selecting a coding scheme for said picture signal; encoding every N scanning lines of said picture signal in succession, using said coding scheme; judging whether an encoded result of a given N scanning lines is the same as an encoded result of an immediately preceding N scanning lines; producing a coincidence signal when both said encoding results are the same as each other; encoding a repetition number which is representative of a number of times said coincidence signal is produced; and transmitting said encoded repetition number.

According to the present invention, there is also provided an encoder for a picture signal comprising redundancy reduction means for receiving successive picture signals having temporal and/or spatial correlation and supplying a redundancy reduced signal by applying to the successive picture signals input thereto a predetermined redundancy reduction operation using one of a plurality of quantization characteristics selected in accordance with a coding scheme, the coding according to the coding scheme being generated every N scanning lines of the picture signals; and characterised by first coding means for encoding information indicative of the coding scheme; second coding means for encoding the redundancy reduced signal from said redundancy reduction means every N scanning lines; means for comparing outputs of said first coding means for one set of N scanning lines with those for the immediately preceding set of N scanning lines to produce a coincidence signal indicative of whether the said outputs are coincident with each other; third coding means for receiving the coincidence signal from said comparing means and encoding a run length during which the same information including a synchronization signal is to continue; and multiplexer means for multiplexing outputs from said first and second coding means or output from said third means according to the coincidence signal from said comparing means.

According to the present invention, there is further provided a decoder for decoding a picture signal the picture signal being so encoded that the output level from the decoder is limited to a predetermined range in accordance with a selected coding scheme which operates on N scanning lines as a unit, and according to which when coding operations with respect to each one of a set of such units are the same, the encoded picture signal includes a coded repetition number representative of the number of repetitions of the same coding operations, the decoder including separating means for separating information indicating the coding scheme, the picture signal and the repetition number, and the separating means comprising: first decoding means operative to decode the coding scheme; and second decoding means operative to decode the encoded picture signal by using output from the first decoding means, the first decoding means including control means responsive to the information indicative of the coded repetition number of the coding operations to cause a decoded picture signal to be produced by the second decoding means in accordance with the repetition number.

Brief Description of the Drawings.

The features and advantages of a method of coding picture signal and coding/decoding apparatus utilising the same according to the present invention will become more apparent from the following description taken in conjunction with the accompanying drawings, in which:

Fig. 1 shows an example of a code train employed in the present invention;

Fig. 2 is a block diagram schematically illustrating an embodiment of a coding/decoding system according to the present invention;

Fig. 3A is a block diagram illustrating an example of a variable length coding circuit in the system shown in Fig 2.

Fig. 3B is a block diagram illustrating an example of a variable length decoding circuit in the system shown in Fig. 2;

Fig. 4A is a block diagram illustrating the details of a coding mode circuit shown in Fig. 3A; and

Fig. 4B is a block diagram illustrating the details of a decoding mode circuit shown in Fig. 3B.

Description of the Preferred Embodiment
Principle of the Invention

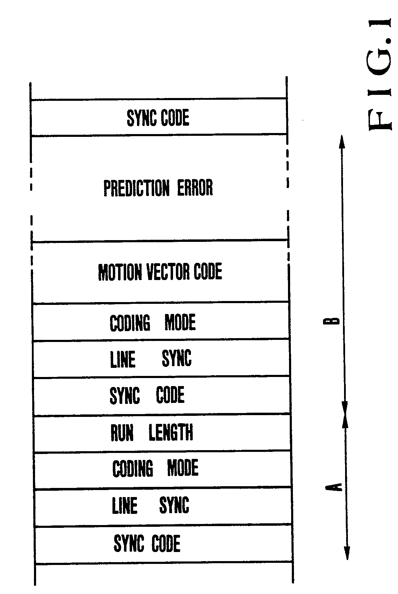

The principle of the present invention will be described with reference to Fig. 1. The code combination labelled B in Fig. 1 is based on the prior art system previously described. In the prior art, the synchronizing code, the line synchronizing signal and the coding mode signal are always generated in a fixed manner and transmitted. However, where the subsequent motion vector and prediction error are a repetition of the current motion vector and prediction error (in general terms, as a repetition every N scanning lines under a certain coding mode signal), execution of encoding every N scanning lines is redundant. In such a case, it is possible in accordance with the present invention to generate a code indicative of the subsequent number of repetitions after the initial encoding, the generating of this code being based on the code combination B shown in Fig. 1.

In particular, the motion vectors and the prediction errors may be all zero, viz., for a completely still or motionless condition. It is therefore convenient to allocate a portion of the coding mode signal, e.g., 1 bit, as a code for indicating whether the present condition represents a completely still condition or not. Such a technique is indicated by A in Fig. 1. Thus to indicate that the completely still condition is being encoded the following operation is carried out: 1 bit within the coding mode signal subsequent to the synchronizing code and the line synchronization is used to indicate the completely still condition, and then subsequent to the coding mode signal, an encoded repetition number m is added to indicate that the status of the coding mode signal remains unchanged during m × N scanning lines. The added number m is indicated by the term run length in Fig. 1, and will be referred to as such hereinafter.

When decoding, it is possible to reproduce a picture signal in which the motion vector and the prediction error are zero for the m × N scanning lines concerned by utilising the coding mode signal at this time.

The number of code bits required for the scanning lines concerned is (8 × 4)/(m × N) bits, per line assuming that 8 bits are required for expressing the repetition number m. If, for example, N = 8, the number of code bits is (4/m) bits per scanning line. Where the entire frame is completely still. it is sufficiently accurate to treat the repetition number m as 65 since 525/8 = 65 (assuming the NTSC system). For this reason, the repetition number m can be expressed still using 8 bits, with the result that 8 × 4 (bits/frame), i.e. 32 bits per frame, is sufficient in the same manner. When compared with 1575 bits/frame according to the conventional method, the ratio of the numbers of code bits in the two cases is 32/1575=1/49. Thus, the system according to the present invention makes it possible to greatly reduce the number of code bits required for expressing the completely still condition for one frame.

When encoding is effected in accordance with the present invention, the completely still portions are denoted by A in Fig. 1 and portions which are not completely still are denoted by B in Fig. 1. Ordinarily, encoding of the picture signal is carried out with both portions A and B being mixed with each other.

The completely still condition described as an example is a condition actually occurring in the case of field repetition. Field repetition is usually used when occurrence of information at the time of coding is excessive or where coding is stopped. When the transmission bit rate is low or a picture includes a sudden movement, the occurrence frequency of the completely still condition is increased. When entire frames are completely still, i.e., coding is stopped for each frame, a frame synchronization signal indicating the beginning of a frame is inserted instead of the line synchronization in A (Fig. I) to effect encoding by using the above mentioned m indicating 65 as a repetition number, thus making it possible to execute encoding of each entire frame.

Preferred Embodiment

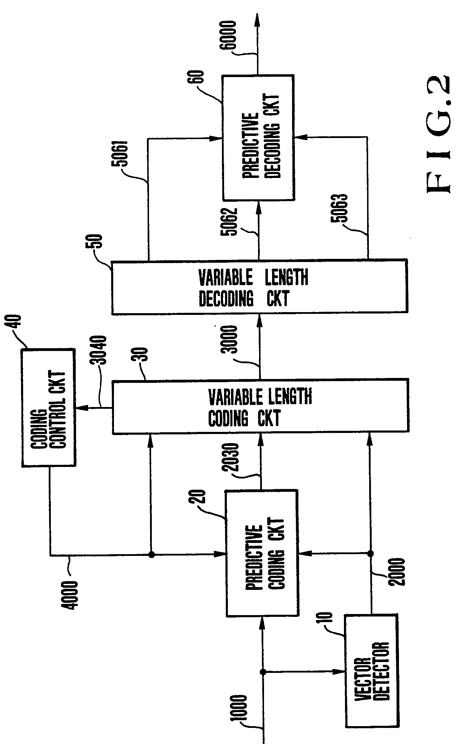

A preferred embodiment according to the present invention will be described with reference to Figs. 2. 3, and 4. Encoder circuitry will be described first.

In Fig. 2, an input picture signal is supplied to a vector detection circuit 10 and a predictive coding circuit 20 via a line 1000. The vector detection circuit 10 detects the speed and direction of a motion, i.e. a motion vector, within a frame and supplies the motion vector to the predictive coding circuit 20 and to a variable length coding circuit 30 via a line 2000. The predictive coding circuit 20 adaptively varies a delay time between successive frames in accordance with the motion indicated by the motion vector to produce a prediction signal, thus effecting a predictive coding using the prediction signal. The predictive coding circuit 20 supplies a prediction error signal to the variable length coding circuit 30 via a line 2030. Usually, prediction error signals are subjected to processing called "quantization" to limit the number of possible output levels. In accordance with the present invention, a plurality of quantization characteristics are prepared, and one of the quantization characteristics is selected in accordance with a coding control signal delivered via a line 4000.

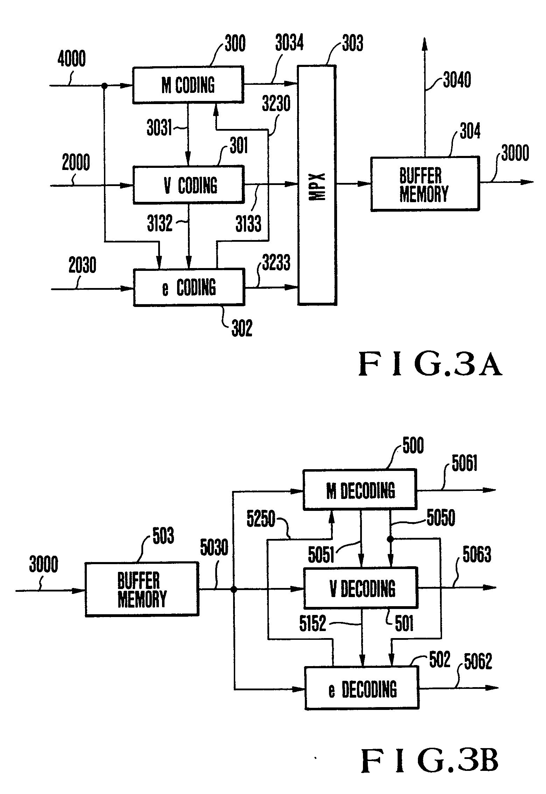

The coding control signal includes control information e.g. a command for dropping of a picture element or scanning line or a repetition of frame or field etc. The coding control signal changes with each unit of N scanning lines. A coding control circuit 40 produces this coding control signal by monitoring the extent to which the capacity of a buffer memory 304 (Fig. 3A) incorporated in the variable length coding circuit 30 occupied. The coding control signal is encoded in the variable length coding circuit 30.

The predictive coding circuit 20 is not necessarily provided with a function to produce a prediction signal corresponding to the motion vector. For instance, prediction constantly using picture elements in the preceding frame, i.e. interframe prediction, may be used. The predictive coding circuit 20 may be replaced with a code converter circuit using an orthogonal transform e.g. a Hadamard Transform or Cosine Transform etc. Furthermore, an orthogonal transform may be applied to a prediction error signal obtained by predictive coding. In such a case, quantization is effected with respect of the transform coefficient obtained, so that a quantized conversion coefficient is applied to the variable length coding circuit 30 via the line 2030.

The variable length coding circuit 30 receives the coding control signal, the prediction error signal (or a conversion coefficient) and the motion vector and encodes these signals so as to match the speed of occurrence of information to the transmission bit rate when transferring the signals to a transmission path 3000. The information indicative of the extent of use of the capacity of the buffer memory 304 (Fig. 3A) is supplied to the coding control circuit 40 via a line 3040.

Decoding circuitry will now be described

A code train which has been formed and supplied via the transmission path 3000 is decoded in a variable length decoding circuit 50. The received code train is separated into a coding control signal, a prediction error signal (or a conversion coefficient) and a motion vector and these signals are output from the variable length decoding circuit 50 via lines 5061, 5062 and 5063, respectively, to a predictive decoding circuit 60. The circuit 60 utilises these three signals to decode/reproduce a picture signal on the basis of an operation which is the inverse of that of the predictive coding circuit 20. The picture signal is output via a line 6000.

When an orthogonal transform is employed in the encoding circuitry, the predictive decoding circuit 60 is replaced by a circuit which carries out the function of orthogonal inverse transform.

The variable length coding circuit 30 and the variable length decoding circuit 50 will be described in detail with reference to Figs. 3A and 3B respectively.

As shown in Fig. 3A, a coding control signal is supplied to an M (mode) coding circuit 300 and an e (error) coding circuit 302 via the line 4000. The operation of the M coding circuit 300 will be described in detail later. The M coding circuit 300 supplies an output to a multiplexer (MPX) 303 via a line 3034, and at the same time information indicating that mode coding is completed to a V (vector) coding circuit 301 via a line 3031. Subsequent to this, the V coding circuit 301 carries out encoding of a motion vector supplied thereto via the line 2000. The V coding circuit 301 supplies the motion vector thus encoded to the MPX 303 via a line 3133 and at the same time information indicating that this encoding is completed to the e coding circuit 302 via a line 3132.

In this example, the motion vectors within N scanning lines are collectively subjected to encoding. The motion vectors thus encoded are arranged to follow after the coding mode as indicated by B in Fig. 1.

The e coding circuit 302 encodes the prediction error signal (or the transform coefficient) supplied via the line 2030 in accordance with the coding control signal, and supplies the encoded signal to the MPX 303 via a line 3233 and at the same time information indicating that encoding is completed to the M coding circuit 300 via a line 3230. The MPX 303 is operative to multiplex three signals e.g. the line synchronization, the coding mode signal and the run length (indicated by A in Fig. 1) or four signals e.g. the line synchronization, the coding mode signal, the motion vector and the prediction error code (at B, Fig. 1). The MPX 303 supplies its multiplexed output signal to the buffer memory 304 where it undergoes speed matching and, thereafter is output to the transmission path 3000. Information indicative of buffer occupancy (i.e. the extent to which the memory capacity is occupied) of the memory 304 is supplied to the coding control circuit 40 via the line 3040.

Fig. 3B shows details of the variable length decoding circuit 50. A code train supplied via the transmission path 3000 undergoes speed matching in the buffer memory 503. Thereafter, the signal thus obtained is supplied to an M decoding circuit 500, a V decoding circuit 501 and an e decoding circuit 502. The M decoding circuit 500 decodes line synchronization and coding mode, and determines whether there exists a code indicating how many times the same encodings for units of N scanning lines are repeated (i.e. the repetition number) and decodes this code when it is present. When the presence of the code indicating that there is a repetition number is detected (see code train A in Fig. I), the M decoding circuit 500 outputs a decoded coding mode signal via a line 5061. At the same time, the M decoding circuit 500 supplies an instruction for outputting the same decoded results the repetition number of times to the V decoding circuit 501 and the e decoding circuit 502 via a line 5050. For example, in the case of a coding stop, both the motion vector and the prediction error signal are ordinarily expressed by zero. While coding is stopped, it is sufficient to output zero. When the indicated number of repeating operations is complete and decoding of the subsequent line synchronization and the coding mode are complete (see code train B in Fig. I), the M decoding circuit 500 instructs the V decoding circuit 501 via a line 5051 to begin decoding the motion vector.

The V decoding circuit 501 is operative to decode a motion vector and output the decoded motion vector via a line 5063. After the delivery of a decoded motion vector is completed, the V decoding circuit 501 instructs the e decoding circuit 502 via a line 5152 to begin decoding the prediction error signal. The decoded prediction error signal is output via a line 5062.

The V decoding circuit 501 and the e decoding circuit 502 must be such that they repeat delivery of the same outputs under the control of the M decoding circuit 500. Ordinarily, they are such that zero can be output as previously mentioned. When the decoding of the prediction error signal is completed in the e decoding circuit 502, a signal indicative of decoding completion is output to the M decoding circuit 500.

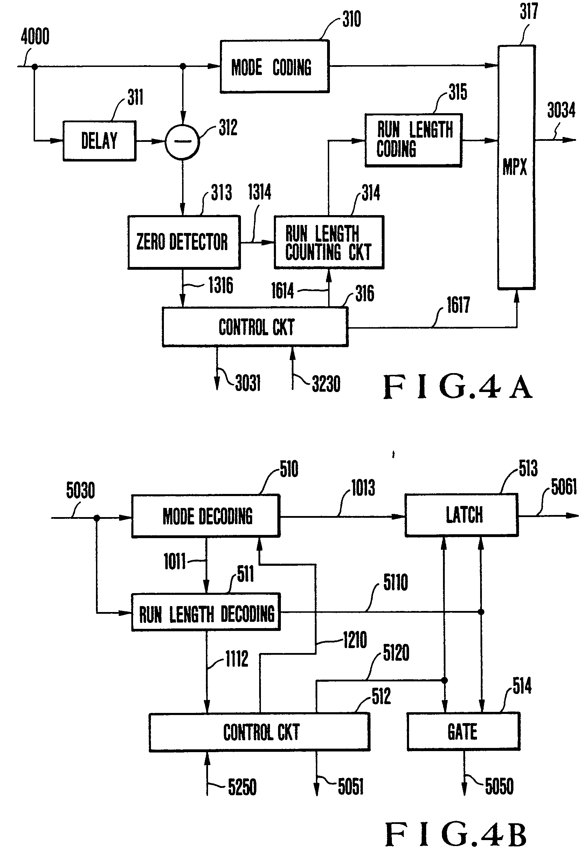

The M encoding circuit 300 and the M decoding circuit 500 will be described in detail with reference to Figs. 4A and 4B respectively.

As shown in Fig. 4A, the coding control signal supplied via the line 4000 is fed to a mode coding circuit 310, a subtractor 312 and a delay circuit 311 at the same time.

The mode coding circuit 310 adds a line synchronization to an input coding control signal, effects encoding thereof and supplies its coded output to a multiplexer (MPX) circuit 317.

The subtractor 312 produces the difference between a current coding control signal and a coding control signal delayed by the time required for scanning N scanning lines. A zero detection circuit 313 performs a zero detection operation. i.e., detects a coincidence on the basis of the difference output from the subtractor 312. When the zero detection circuit 313 detects zero, it instructs a run length counting circuit 314. via a line 1314, to increase its count by one, and transmits information regarding whether zero is present or not via a line 1316 to a control circuit 316.

The run length counting circuit 314 counts the number of repetitions in accordance with a counter start/stop instruction supplied via a line 1614. When the run length counting circuit 314 receives a stop instruction, it delivers the resultant count to the run length coding circuit 315. The run length coding circuit 315 encodes the input count and supplies the result to the MPX circuit 317.

The control circuit 316 controls the counting operation of the run length counting circuit 314 and the multiplexing operation of the MPX circuit 317. The control circuit 316 receives zero or non zero via the line 1316. When transition from non-zero to zero occurs, the control circuit 316 instructs the run length counting circuit 314 via a line 1614 to initiate a counting operation. When transition from zero to non-zero is carried out, the control circuit 316 instructs the circuit 314 to stop the counting operation. The control circuit 316 controls the MPX circuit 317 via a line 1617 in such a manner that during a run length counting operation, the MPX circuit 317 does not multiplex an output from the mode coding circuit 310, and only when a run length counting operation is completed, does the MPX circuit 317 multiplex an output from the run length encoding circuit 315. Furthermore, when the run length counting operation has been carried out, the control circuit 316 instructs the V coding circuit 301 via the line 3031 to initiate coding of a motion vector after the subsequent mode is output. On the other hand, when the run length counting operation is not carried out, the control circuit 316 instructs the V coding circuit 301 to effect the same operation each time the mode code is output.

During a run length counting operation, the V coding circuit 301 has no output, which corresponds to zero output. The e coding circuit 302 also has no output, which corresponds to zero output, during this operation since the completion of the encoding of a motion vector from the V coding circuit 301 is not instructed during a run length counting operation.

The control circuit 316 is restarted in response to a signal, supplied via a line 3230 from the e coding circuit 302, indicating completion of encoding of a prediction error signal.

The line synchronization and the coding mode signals which are multiplexed, or the line synchronization, the coding mode signal and a signal indicative of repetition numbers which are multiplexed are fed to the MPX 303 (Fig. 3A) via the line 3034.

Fig. 4B illustrates details of the M decoding circuit 500. An output from the buffer memory 503 supplied via the line 5030 is fed to a mode decoding circuit 510 and a run length decoding circuit 511. The mode decoding circuit 510 is operative to decode the line synchronization and the coding mode signal and supplies the decoded result to a latch circuit 513 via a line 1013. When a code indicative of a repetition number is present subsequent to the coding mode signal, the run length decoding circuit 511 is operative to decode that code, and thereafter to deliver via a line 1112 information indicative of the run length to a control circuit 512. At the same time, the run length decoding circuit 511 instructs the latch circuit 513 via a line 5110 to latch the coding mode signal just decoded, and further allows a gate circuit 514 to produce a signal instructing repeated operations in accordance with the repetition number.

The control circuit 512 counts out a time corresponding to the repetition number supplied. When the counted time has elapsed, the control circuit 512, via a line 5120, instructs the latch circuit 513 to stop the latching operation, and the gate circuit 514 to stop the output of the signal indicative of repetition number. The control circuit 512 also informs the mode decoding circuit 510 via a line 1210 that repeating operations are completed and instructs it to execute a decoding operation on the coding mode signal.

When there is no information indicative of run length subsequent to the coding mode signal, the run length decoding circuit 511 does not supply any signals to the latch circuit 513 and the gate circuit 514, and informs the control circuit 512 via a line 1112 that decoding of the coding mode signal is completed. At this time, the control circuit 512 instructs the V decoding circuit 501 via a line 5051 to initiate decoding of a motion vector.

The operation of the control circuit 512 is initiated by a signal supplied via the line 5250 from the e encoding circuit 502 and indicating that decoding of the prediction error signal is completed, and is terminated by an instruction to the V decoding circuit 501 to initiate the decoding of a motion vector.

A signal indicative of the repetition number is output from the gate circuit 514 via the line 5050. When there is no information indicative of repetition, the repetition signal is considered to be inactive signal that does not affect the V decoding circuit 501 and the e decoding circuit 502. In contrast, when information indicative of repetition is present, the repetition signal is considered to be an active signal that instructs that both outputs from the V decoding circuit 501 and the e decoding circuit 502 are to be zero.

The method of encoding according to the present invention is to encode a repetition number instead of repeating encoding operations one after another when the same coded outputs would repeatedly occur. This reduces the quantity of information required to be transmitted, and when a picture signal is encoded and transmitted at a very low bit transmission rate, it is consequently possible to additionally assign a bit transmission rate to encoding of the original picture portion from the reduced quantity of information, so that there is an improvement in picture quality. Consequently the advantage of the present invention increases as the transmission rate is lowered. The present invention is applicable not only to the predictive encoding system described hereinbefore but also to an orthogonal transform system in the same manner.

## Claims

1. A method for encoding a picture signal using interframe correlation, including the steps of: presetting a number N for defining a unit of N scanning lines (N is a positive integer) of said picture signal to be encoded; selecting a coding scheme for said picture signal; encoding every N scanning lines of said picture signal in succession, using said coding scheme; judging (312, 313) whether an encoded result of a given N scanning lines is the same as an encoded result of an immediately preceding N scanning lines; producing a coincidence signal (1316) when both said encoding results are the same as each other; encoding (315) a repetition number which is representative of a number of times said coincidence signal (1316) is produced; and transmitting said encoded repetition number.

2. An encoder for a picture signal comprising redundancy reduction means (20) for receiving successive picture signals having temporal and/or spatial correlation and supplying a redundancy reduced signal (2030) by applying to the successive picture signals input thereto a predetermined redundancy reduction operation using one of a plurality of quantization characteristics selected in accordance with a coding scheme, the coding according to the coding scheme being generated every N scanning lines of the picture signals; and characterised by first coding means (40) for encoding information indicative of the coding scheme; second coding means (302) for encoding the redundancy reduced signal (2030) from said redundancy reduction means (20) every N scanning lines; means (312, 313) for comparing outputs of said first coding means (40) for one set of N scanning lines with those for the immediately preceding set of N scanning lines to produce a coincidence signal (1314, 1316) indicative of whether the said outputs are coincident with each other; third coding means (314, 315) for receiving the coincidence signal (1314, 1316) from said comparing means (312, 313) and encoding a run length during which the same information including a synchronization signal is to continue; and multiplexer means (317, 303) for multiplexing outputs from said first and second coding means or output from said third means (314, 315) according to the coincidence signal (1314, 1316) from said comparing means (312, 313).

3. An encoder according to claim 2, characterised by a vector detection circuit (10) operative to detect a motion vector from said input picture signal, and in that the said redundancy reduction means comprises a prediction coding circuit (20) responsive to the input picture signal and the motion vector from the vector detection circuit (10) to produce a prediction signal so as to effect predictive coding for production of a prediction error signal which is subjected to quantization in accordance with one of a plurality of quantization characteristics, the said one being selected in accordance with a coding control signal (4000) fed from the first coding means (40).

4. An encoder according to claim 3. characterised by a variable length coding circuit (30) responsive to the coding control signal (4000), the prediction error signal and the motion vector, the variable length coding circuit (30) including the second and third coding means (302, 314, 315) and the multiplexer means (317, 303).

5. An encoder according to claim 4, characterised in that the variable length coding circuit (30) comprises mode coding means (310) responsive to the coding control signal (4000) to produce a mode coding output by encoding said coding control signal and adding a line synchronization thereto, and the said comparing means, the said comparing means comprising a subtractor (312) for calculating difference between a current coding control signal and a coding control signal delayed by the time required for scanning N lines, and a coincidence circuit (313) functioning to produce the said coincidence signal (1314, 1316) when it detects zero, and in that the third coding means comprises a counter (314) responsive to the coincidence signal (1314) to execute an incremental operation and accumulate a count representing a repetition number, and a run length coding circuit (315) operative to encode a count representing a repetition number, and in that the multiplexer means includes a multiplexer (317) operative to multiplex the mode coding output signal and an output of the run length coding circuit (315) representing a repetition number.

6. An encoder according to claim 5, characterised in that the variable length coding circuit (30) further comprises a control circuit (316) responsive to the coincidence signal (1316) from the coincidence circuit (313) and a signal (3230) indicating that a coding operation in the second means (302) is completed to deliver control signals (1614, 1617) to the said counter (314) and the said multiplexer (317).

7. An encoder according to claim 4, characterised in that the variable length coding circuit (30) further comprises a coding circuit (301) operative to encode the motion vector (2000) from the vector detection circuit (10), and a buffer memory (304) operative to effect speed matching between information obtained as a multiplexed output from the said multiplexer means (303) and a transmission speed and to transmit coded information thus speed matched and to deliver a signal (3040) indicative of buffer occupancy to the first coding means (40) for creating the coding control signal (4000).

8. A decoder for decoding a picture signal the picture signal being so encoded that the output level from the decoder is limited to a predetermined range in accordance with a selected coding scheme which operates on N scanning lines as a unit, and according to which when coding operations with respect to each one of a set of such units are the same, the encoded picture signal includes a coded repetition number representative of the number of repetitions of the same coding operations, the decoder including separating means (50) for separating information indicating the coding scheme. the picture signal and the repetition number, and the separating means (50) comprising: first decoding means (500) operative to decode the coding scheme; and second decoding means (501, 502) operative to decode the encoded picture signal by using output (5050, 5051) from the first decoding means (500), the first decoding means (500) including control means (512) responsive to the information indicative of the coded repetition number of the coding operations to cause a decoded picture signal to be produced by the second decoding means (501, 502) in accordance with the repetition number.

9. A decoder according to claim 8, characterised in that the first decoding means (500) includes a run length decoding circuit (511) operative to decode the information indicative of the repetition number.

10. A decoder according to claim 9. characterised in that the picture signal is decoded based on a predictive coding system and the second decoding means includes a second decoding circuit (502) operative to decode a coded prediction error signal, and a third decoding circuit (501) operative to decode a coded motion vector.

11. A decoder according to claim 10, characterised in that separating means (50) includes a buffer memory (503) for transmission speed matching provided as the input stage thereof.

12. A decoder according to claim 11, characterised in that the first decoding means (500) includes a mode decoding circuit (510) operative to decode the coding mode signal, a latch circuit (513) for latching the decoded coding mode signal (1013), the run length decoder (511) being operative to so decode information representing a repetition number as to allow the latch circuit (513) to latch the decoded coding mode signal, and a control circuit (512) which, in response to a signal (1112) indicative of a repetition number from the run length decoder (511) and a signal (5250) indicating that a decoding operation is completed from the second decoding circuit (502), outputs a command (5120) to the latch circuit (513) for stopping the latch operation, a command (5051) for stopping repeating operation to the third decoding circuit (501), and a command (1210) for initiating a decoding operation to the mode decoding circuit (510).

**Patentansprüche**

1. Verfahren zur Bildsignalcodierung mittels einer Zwischenrahmenbeziehung mit den Schritten: Vorwählen einer Zahl N ( N ist positiv und ganz) zum Definieren einer Einheit von N Bildzeilen eines Bildsignals, das codiert werden soll; Auswählen eines Codierschemas für das Bildsignal; Codieren aller N-Bildzeilen des Bildsignals in fortlaufender Reihenfolge mittels des Codierschemas; Beurteilen (312, 313), ob das codierte Resultat von N-Bildzeilen dasselbe ist wie das codierte Resultat der unmittelbar vorangegangenen N-Bildzeilen; Erzeugen eines Koinzidenzsignals (1316), wenn beide codierte Resultate einander gleich sind; Codieren (315) einer Wiederholungszahl, die repräsentativ ist für die Zahl der Häufigkeit des erzeugten Koinzidenzsignals (316); und Übertragen der codierten Wiederholungszahl.

2. Codierer für ein Bildsignal mit einer Redundanzreduktionseinrichtung (20) zum Empfangen aufeinanderfolgender Bildsignale mit zeitlicher und/oder räumlicher Beziehung und zum Liefern eines reduzierten Redundanzsignals (2030) durch Anwenden einer vorbestimmten Redundanzreduzierungsoperation auf den Eingang der aufeinanderfolgenden Bildsignale mittels einer aus mehreren Quantisierungscharakteristika, die entsprechend einem Codierschema ausgewählt wurde, wobei mittels der Codierung entsprechend des Codierschemas alle N-Bildzeilen des Bildsignals erzeugt werden, gekennzeichnet durch eine erste Codiereinrichtung (40) zum Codieren von Information, die im Codierschema angezeigt wird, eine zweite Codiereinrichtung (302) zum Codieren jeder der N-Bildzeilen mit dem reduzierten Redundanzsignal (2030) von der Redundanzreduktionseinrichtung (20), eine Einrichtung (312' 313) zum Vergleichen der Ausgänge der ersten Codiereinrichtung (40) für einen Satz von N-Bildzeilen, mit denen des unmittelbar vorhergehenden Satzes von N- Bildzeilen, um ein Koinzidenzsignal (1314, 1316) zu erzeugen, das anzeigt, ob die Ausgänge untereinander koinzident sind; eine dritte Codiereinrichtung (314, 315) zum Empfangen des Koinzidenzsignals (1314, 1316) von der Komparatoreinrichtung (312, 313) und zum Codieren einer Lauflänge, während der dieselbe Information einschließlich eines Synchronisationssignals weitergeleitet wird, und einer Multiplexereinrichtung (317, 303) zum Multiplexen der Ausgänge der ersten und zweiten Codiereinrichtung oder des Ausgangs der dritten Codiereinrichtung (314, 315) entsprechend dem Koinzidenzsignal (1314, 1316) von der Komparatoreinrichtung (312, 313).

3. Codierer nach Anspruch 2, gekennzeichnet durch einen Vektordetektierschaltkreis (10), um einen Bewegungsvektor des Bildsignals zu detektieren, und dadurch, daß die Redundanzreduktionseinrichtung aufweist: einen Vorhersagecodierschaltkreis (20), der auf das Eingangsbildsignal und den Bewegungsvektor von dem Vektordetektierschaltkreis (10) anspricht, um ein Vorhersagesignal zu erzeugen und eine Vorhersagecodierung zu veranlassen, um ein Vorhersagefehlersignal zu erzeugen, das quantifiziert wird gemäß einer aus der Menge der Quantifizierungscharakteristiken, welche ausgewählt wird entsprechend einem Codiersteuersignal (4000), das von der ersten Codiereinrichtung (40) zugeführt wurde.

4. Codierer nach Anspruch 3, gekennzeichnet durch einen variablen Längencodierschaltkreis (30), der auf das Codiersteuersignal (4000), das Vorhersagefehlersignal und den Bewegungsvektor anspricht, wobei der variable Längencodierschaltkreis (30) die zweite und dritte Codiereinrichtung (302, 314, 315) und die Multiplexereinrichtung (317, 303) einschließt.

5. Codierer nach Anspruch 4, dadurch gekennzeichnet, daß der variable Längencodierschaltkreis (30) eine Moduscodiereinrichtung (310) aufweist, die auf das Codiersteuersignal (4000) anspricht, um einen Moduscodierausgang durch Codieren des Codiersteuersignals und Addition einer Liniensynchronisation zu erzeugen; sowie die Komparatoreinrichtung; daß die Komparatoreinrichtung aufweist: eine subtrahiereinrichtung (312) zum Berechnen der Differenz zwischen einem gegenwärtigen Codiersteuersignal und einem Codiersteuersignal, das verzögert ist durch die Zeit, die erforderlich ist, um die N-Linien abzutasten, und einen Koninzidenzschaltkreis (313), der das Koinzidenzsignal (1314, 1316) erzeugt, wenn er NULL feststellt; daß die dritte Codiereinrichtung aufweist: einen Zähler (314), der auf das Koinzidenzsignal (1314) anspricht, um eine Inkrementaloperation auszuführen und eine Zählergröße zu akkumulieren, die eine Wiederholungszahl repräsentiert und einen Lauflängencodierschaltkreis (315), der eine Zählergröße, die eine Wiederholungszahl repräsentiert, codiert; und daß die Muktiplexereinrichtungeinen Multiplexer (317) aufweist, der das Moduscodierausgangssignal multiplext und einen Ausgang des Lauflängencodierschaltkreises (315), der eine Wiederholungszahl repräsentiert, multiplext.

6. Codierer nach Anspruch 5, dadurch gekennzeichnet, daß der variable Längencodierschaltkreis (30) ferner aufweist: einen Steuerkreis (316), der auf das Koinzidenzsignal (1316) vom Koinzidenzschaltkreis (313) und ein Signal (3230), das anzeigt, daß eine Codieroperation in der zweiten Einrichtung (302) abgeschlossen ist, anspricht, um Steuersignale (1614, 1617) zum Zähler (314) and dem Multiplexer (317) zu liefern.

7. Codierer nach Anspruch 4, dadurch gekennzeichnet, daß der variable Längencodierschaltkreis (30) ferner aufweist: einen Codierschaltkreis (301), um den Bewegungsvektor (2000) vom Vektordetektierschaltkreis (10) zu codieren; und einen Pufferspeicher (304), der eine Anpassung der Geschwindigkeit zwischen der Information, die als multiplexter Ausgang von der Multiplexereinrichtung (303) erhalten wird, und einer Übertragungsgeschwindigkeit bewirkt, die geschwindigkeitsangepaßte codierte Information überträgt und ein Signal (3040), das die Pufferbesetzung anzeigt, zur ersten Codiereinrichtung (40) zum Erzeugen des Codiersteuersignals (4000) liefert.

8. Decodierer zum Decodieren eines Bildsignals, wobei das Bildsignal so decodiert wird, daß das Ausgangsniveau des Decodierers auf einen vorbestimmten Bereich begrenzt wird entsprechend einem selektierten Codierschema, welches auf eine Einheit von N-Bildzeilen wirkt; wobei, wenn die Codieroperationen bezüglich jedes Satzes solcher Einheiten dieselben sind, das codierte Bildsignal eine codierte Wiederholungszahl, die repräsentiv für die Zahl der Wiederholung derselben Codieroperationen ist, einschließt; wobei der Decodierer eine Separierungseinrichtung (50) zum Separieren von Information aufweist, die das Codierschema, das Bildsignal und die Wiederholungszahl anzeigt; und wobei die Separierungseinrichtung (50) aufweist: eine erste Decodiereinrichtung (500), um das Codierschema zu decodieren und eine zweite Decodiereinrichtung (501, 502) um das codierte Bildsignal mittels eines Ausgangs (5050, 5051) von der ersten Decodiereinrichtung (500) zu decodieren, wobei in der ersten Decodiereinrichtung (500) eine Kontrolleinrichtung (512) auf die Information anspricht, welche die codierte Wiederholungszahl der Codierungsoperationen anzeigt, um durch die zweite Decodiereinrichtung (501, 502) entsprechend der Wiederholungszahl ein decodiertes Bildsignal zu erzeugen.

9. Decodierer nach Anspruch 8, dadurch gekennzeichnet, daß die erste Decodiereinrichtung (500) einen Lauflängendecodierschaltkreis (511) aufweist, der die Information decodiert, die die Wiederholungszahl anzeigt.

10. Decodierer nach Anspruch 9, dadurch gekennzeichnet, daß das Bildsignal auf der Basis eines Vorhersagecodiersystems decodiert wird, die zweite Decodiereinrichtung einen zweiten Decodierschaltkreis (502) aufweist, der ein codiertes Vorhersagefehlersignal decodiert, und daß ein dritter Decodierschaltkreis (501) einen codierten Bewegungsvektor decodiert.

11. Decodierer nach Anspruch 10, dadurch gekennzeichnet, daß die Separierungseinrichtung (50) einen Pufferspeicher (503) zum Anpassen der Übertragungsgeschwindigkeit einschließt, der als Eingangsstufe vorgesehen ist.

12. Decodierer nach Anspruch 11, dadurch gekennzeichnet, daß die erste Decodiereinrichtung (500) aufweist: einen Modusdecodierschaltkreis (510), der das Codiermodussignal decodiert, einen Verriegelungsschaltkreis (513) zum Verriegeln des decodierten Codiermodussignals (1013), wobei der Lauflängendecoder (511) die Information, welche eine Wiederholungszahl repräsentiert, decodiert, um damit dem Verriegelungsschaltkreis (513) zu gestatten, das decodierte Codiermodussignal zu verriegeln und einen Steuerkreis (512), der auf ein Signal (1112), das eine Wiederholungszahl vom Lauflängendecoder (511) anzeigt, und auf ein Signal (5250), das anzeigt, daß eine Decodieroperation vom zweiten Decodierschaltkreis (5120) abgeschlossen ist, anspricht und einen Befehl (5120) an den Verriegelungsschaltkreis (513) zum Stoppen der Verriegelungsoperation, einen Befehl (5051) an den dritten Decodierschaltkreis (501) zum Stoppen der Wiederholungsoperation und einen Befehl (1210) an den Modusdecodierschaltkreis (510) zum Einleiten einer Decodieroperation ausgibt.

**Revendications**

1. Procédé pour coder un signal d'image utilisant une corrélation inter-trames, comprenant les étapes consistant à: préétablir un nombre N pour définir une unité de N lignes de balayage (N est un nombre entier positif) du signal d'image à coder; sélectionner un code pour le signal d'image; coder chacune des N lignes de balayage du signal d'image les unes à la suite des autres, en utilisant le codage; juger (312, 313) du fait qu'un résultat codé d'un N donné de lignes de balayage est le même que le résultat codé d'un N immédiatement précédent de lignes de balayage; produire un signal de coïncidence (1316) lorsque les deux résultats de codage sont identiques; coder (315) un nombre de répétitions qui est représentatif du nombre de fois où le signal de coïncidence (1316) est produit; et transmettre le nombre de répétitions codées.

2. Codeur pour un signal d'image comprenant un moyen (20) de réduction de redondance afin de recevoir des signaux d'images successifs ayant une corrélation temporelle et/ou spatiale et fournir un signal réduit de redondance (2030) par application aux signaux successifs d'images entrés d'une opération prédéterminée de réduction de redondance utilisant l'une d'une multitude de caractéristiques de quantification sélectionnées en conformité avec un code, le codage en conformité avec le code étant produit toutes les N lignes de balayage des signaux d'images; et caractérisé par un premier moyen de codage (40) pour coder l'information représentative du code; un second moyen de codage (302) pour coder le signal réduit de redondance (2030) provenant du moyen de réduction de redondance (20) toutes les N lignes de balayage; un moyen (312, 313) pour comparer les sorties du premier moyen de codage (40) pour un jeu de N lignes de balayage à celles pour le jeu immédiatement précédent de N lignes de balayage afin de produire un signal de coïncidence (1314, 1316) représentatif du fait que les sorties coïncident ou non; un troisième moyen de codage (314, 315) pour recevoir le signal de coïncidence (1314, 1316) provenant du moyen de comparaison (312, 313) et coder une longueur d'exécution au cours de laquelle la même information comprenant un signal de synchronisation doit se poursuivre; et un moyen de multiplexeur (317, 303) pour multiplexer les sorties des premier et second moyens de codage ou la sortie du troisième moyen (314, 315) conformément au signal de coïncidence (1314, 1316) provenant du moyen de comparaison (312, 313).

3. Codeur selon la revendication 2, caractérisé par un circuit (10) de détection de vecteur, pouvant être mis en oeuvre pour détecter un vecteur de mouvement à partir du signal d'image d'entrée, et en ce que le moyen de réduction de redondance comprend un circuit (20) de codage de prédiction répondant au signal d'image d'entrée et au vecteur de mouvement provenant du circuit (10) de détection de vecteur afin de produire un signal de prédiction et d'affecter le codage prédictif pour produire un signal d'erreur de prédiction qui est soumis à quantification en conformité avec l'une d'une multitude de caractéristiques de quantification, celui-ci étant choisi en conformité avec un signal (4000) de commande de codage introduit à partir du premier moyen de codage (40).

4. Codeur selon la revendication 3, caractérisé par un circuit (30) de codage à longueur variable répondant au signal (4000) de commande de codage, au signal d'erreur de prédiction et au vecteur de mouvement, le circuit (30) de codage à longueur variable comportant les second et troisième moyens de codage (302, 314, 315) et le moyen de multiplexeur (317, 303).

5. Codeur selon la revendication 4, caractérisé en ce que le circuit (30) de codage à longueur variable comprend un moyen (310) de codage de mode répondant au signal (4000) de commande de codage pour produire une sortie de codage de mode par codage du signal de commande de codage et addition à celui-ci d'une synchronisation de ligne, et le moyen de comparaison, le moyen de comparaison comprenant un soustracteur (312) pour calculer une différence entre un signal de commande de codage courant et un signal de commande de codage retardé du temps nécessaire pour balayer N lignes, et un circuit de coïncidence (313) fonctionnant pour produire ledit signal de coïncidence (1314, 1316) lorsqu'il détecte zéro, et en ce que le troisième moyen de codage comprend un compteur (314) répondant au signal de coïncidence (1314) pour exécuter une opération incrémentielle et accumuler un comptage représentant un nombre de répétitions, et un circuit (315) de codage de longueur d'exécution pouvant fonctionner pour coder un comptage représentant un nombre de répétitions, et en ce que le moyen de multiplexeur comporte un multiplexeur (317) pouvant fonctionner pour multiplexer le signal de sortie du codage de mode et une sortie du circuit (315) de codage de longueur d'exécution représentant un nombre de répétitions.

6. Codeur selon la revendication 5, caractérisé en ce que le circuit (30) de codage à longueur variable comprend en outre un circuit de commande (316) répondant au signal de coïncidence (1316) provenant du circuit de coïncidence (313) et un signal (3230) indiquant qu'une opération de codage dans le second moyen (302) est achevée, afin de fournir des signaux de commande (1614, 1617) audit compteur (314) et audit multiplexeur (317).

7. Codeur selon la revendication 4, caractérisé en ce que le circuit (30) de codage à longueur variable comprend en outre un circuit de codage (301) pouvant fonctionner pour coder le vecteur de mouvement (2000) provenant du circuit de détection de vecteur (10), et une mémoire tampon (304) pouvant fonctionner pour effectuer une adaptation des vitesses entre l'information obtenue comme une sortie multiplexée du moyen de multiplexeur (303) et une vitesse de transmission et pour transmettre une information codée ainsi adaptée en vitesse et fournir un signal (3040) représentatif de l'occupation du tampon au premier moyen de codage (40) afin de créer le signal (4000) de commande de codage.

8. Décodeur afin de décoder un signal d'image, le signal d'image étant codé de façon que la valeur de sortie du décodeur soit limitée à une gamme prédéterminée en conformité avec un codage sélectionné qui agit sur N lignes de codage comme une unité, et selon lequel, lorsque des opérations de codage par rapport à chacune d'un jeu de telles unités sont les mêmes, le signal d'image codé comprend un nombre de répétitions codées représentatif du nombre de répétitions des mêmes opérations de codage, le décodeur comportant un moyen de séparation (50) afin de séparer l'information indiquant le code, le signal d'image et le nombre de répétitions, et le moyen de séparation (50) comportant: un premier moyen de codage (500) pouvant fonctionner pour décoder le code, et un second moyen de décodage (501, 502) pour décoder le signal d'image codé en utilisant la sortie (5050, 5051) du premier moyen de décodage (500), le premier moyen de décodage (500) comportant un moyen de commande (512) répondant à l'information représentative du nombre de répétitions codées des opérations de codage afin qu'un signal d'image décodé soit produit par le second moyen de décodage (501, 502) en conformité avec le nombre de répétitions.

9. Décodeur selon la revendication 8, caractérisé en ce que le premier moyen de décodage (500) comprend un circuit (511) de décodage de longueur d'exécution pouvant fonctionner pour décoder l'information représentative du nombre de répétitions.

10. Décodeur selon la revendication 9, caractérisé en ce que le signal d'image est décodé sur la base d'un système de codage prédictif et le second moyen de décodage comprend un second circuit de décodage (502) pouvant fonctionner pour décoder un signal d'erreur de prédiction codé, et un troisième circuit de décodage (501) pouvant fonctionner pour décoder un vecteur de mouvement codé.

11. Décodeur selon la revendication 10, caractérisé en ce que le moyen de séparation (50) comprend une mémoire-tampon (503) pour l'adaptation de la vitesse de transmission fournie comme son étage d'entrée.

12. Décodeur selon la revendication 11, caractérisé en ce que le premier moyen de décodage (500) comprend un circuit (510) de décodage de mode pouvant fonctionner pour décoder le signal de mode de codage, un circuit d'enclenchement (513) pour enclencher le signal (1013) de mode de codage décodé, le décodeur (511) de longueur d'exécution pouvant fonctionner pour décoder ainsi l'information représentant un nombre de répétitions afin de permettre au circuit d'enclenchement (513) d'enclencher le signal de mode de codage décodé, et un circuit de commande (512) qui, en réponse à un signal (1112) représentatif d'un nombre de répétitions provenant du décodeur (511) de longueur d'exécution et un signal (5250) indiquant qu'une opération de décodage est achevée à partir du second circuit de décodage (502), sort un ordre (5120) pour le circuit d'enclenchement (513) afin de stopper l'opération d'enclenchement, un ordre (5051) pour stopper l'opération de répétition pour le troisième circuit de décodage (501) et un ordre (1210) pour amôrcer une opération de décodage pour le circuit (510) de décodage de mode.

| | |
|---|---|
| SYNC CODE | |
| PREDICTION ERROR | |
| MOTION VECTOR CODE | B |
| CODING MODE | |
| LINE SYNC | |
| SYNC CODE | |
| RUN LENGTH | |
| CODING MODE | A |
| LINE SYNC | |
| SYNC CODE | |

FIG.1

F I G. 2

FIG.3A

FIG.3B

FIG.4A

FIG.4B